# FASCICULE DE BREVET EUROPEEN

(11) **EP 1 466 414 B1**
(45) Date de publication et mention de la délivrance du brevet: **07.05.2008**
(21) Numéro de dépôt: 03717332.5
(22) Date de dépôt: 09.01.2003
(51) Int. Cl.: H04B 1/034, G08B 21/00

(54) **Ensemble emetteur-récepteur pour un dispositif de surveillance de bébés**
Senderempfängerersatz für ein babyfon
Transceiver set for baby monitor

(30) Priorité: 14.01.2002 FR 0200381
(43) Date de publication de la demande: 13.10.2004
(73) Titulaire: SEB S.A., 69132 Ecully (FR)
(72) Inventeur: SERRES VIVES, Gérald, 01200 Eloise (FR); DE WASSEIGE, Patrick, F-74150 Moye (FR)
(74) Mandataire: Kiehl, Hubert
(86) Numéro de dépôt international: PCT/FR2003/000056
(87) Numéro de publication internationale: WO 2003/061144

(56) Documents cités:
- WO-A-00/74017
- US-A- 5 280 635

## Description

La présente invention concerne un dispositif de surveillance à distance, plus particulièrement un ensemble formé par un émetteur et au moins un récepteur constituant un dispositif de surveillance audio des bébés.

On connaît dans l'état de la technique des dispositifs de surveillance audio des bébés ou des jeunes enfants, dispositifs constitués d'une part d'un boîtier émetteur placé dans la proximité du bébé et d'un boîtier récepteur placé dans la proximité du parent ou porté par ce dernier.

Un boîtier émetteur comprend généralement un microphone et un dispositif émetteur apte à envoyer un signal par ondes radio d'une portée maximum prédéterminée vers un boîtier récepteur comprenant un dispositif récepteur qui capte ces ondes et déclenche par la suite un signal visuel, auditif, tactile ou une combinaison de ces signaux. Les deux boîtiers émetteur, respectivement récepteur, comprennent également des moyens d'alimentation électrique.

Un problème posé souvent par ces appareils est leur portabilité. Des solutions ont été apportées en réduisant les dimensions du récepteur qui devient alors miniaturisé pouvant être monté sur un bracelet ou être fixé par une attache à une ceinture ou à un vêtement. Une telle solution a été décrite dans le document US 5 512 880.

Toutefois, même avec un récepteur portable, on se pose toujours la question de l'encombrement et de la portabilité de l'ensemble. Ainsi, lors d'un déplacement en dehors de l'habitat, par exemple lorsque l'enfant va chez la nourrice ou en vacances, les deux appareils étant encombrants, il est toujours difficile de les prendre avec soi.

Un autre inconvénient est que l'utilisation de plusieurs appareils, par exemple, un dispositif de surveillance, une lampe de nuit, une boîte musicale, etc., sans possibilité de rangement prend beaucoup de place dans une chambre de bébé, déjà encombrée par les jouets et les divers accessoires.

On connaît par ailleurs d'un domaine voisin, celui des dispositifs d'alarme comportant des circuits électroniques aptes à émettre des avertissements sonores dès qu'une distance préétablie entre l'émetteur et le récepteur a été dépassée, le document WO 00/74017 qui décrit un boîtier récepteur apte à loger un ou plusieurs dispositifs émetteurs. Dans ce document, le boîtier récepteur a été modifié de manière à créer, à l'intérieur d'une enceinte ouverte, un espace permettant de loger un ou plusieurs dispositifs émetteurs. Cette solution présente comme premier désavantage le fait d'avoir un boîtier de base surdimensionné, qui s'avère encombrant pour un appareil portatif, en l'occurrence le récepteur. De surcroît, l'espace permettant de loger les dispositifs émetteurs est une enceinte ouverte qui n'assure pas une bonne protection du milieu extérieur, ni de sécurité lors du transport.

Le but de l'invention est de remédier aux inconvénients précités et de proposer un dispositif de surveillance des bébés qui soit d'un encombrement réduit et facilement transportable lors d'un déplacement à l'extérieur.

Un autre but de l'invention est de proposer un espace de rangement fermé pour les composants du dispositif de surveillance des bébés pouvant rendre l'ensemble émetteur et récepteur facilement transportable, tout en offrant un boîtier récepteur, portatif, particulièrement compact.

Un autre but de l'invention est un dispositif de surveillance des bébés intégrant plusieurs fonctions dans un même boîtier, tout en étant fiable en fonctionnement et facile à industrialiser pour un moindre coût de fabrication.

Un but supplémentaire de l'invention est d'offrir un rangement pour un ensemble émetteur - récepteur d'un dispositif de surveillance des bébés, de faible encombrement, tout en étant apte à faciliter le déplacement de l'ensemble en toute sécurité, sans risque d'abîmer ses composants.

Ces buts sont réalisés avec un ensemble émetteur - récepteur tel que décrit dans la revendication indépendente. Des modes particuliers de réalisation sont décrits dans les revendications dépendentes.

Par boîtier émetteur on comprend un appareil ayant une fonction d'émetteur comprenant donc, à l'intérieur d'un boîtier, un microphone, une antenne d'émission, des moyens d'alimentation en énergie électrique, un circuit électronique effectuant la gestion de son fonctionnement, ainsi qu'une interface de commande. De la même manière, par boîtier récepteur on comprend un appareil ayant une fonction de récepteur, comportant, à l'intérieur d'un boîtier, une antenne de réception, un haut parleur, des moyens d'alimentation électrique, un circuit électronique et une interface de commande et, à l'extérieur du boîtier, un moyen de fixation ou de support du boîtier.

Selon l'invention, l'enceinte du boîtier émetteur a des dimensions supérieures à celles du boîtier récepteur, c'est-à-dire que les dimensions de ladite enceinte sont suffisantes pour accueillir le boîtier récepteur qui peut être rangé à l'intérieur du boîtier émetteur. Ceci permet au boîtier récepteur, qui est portatif, d'avoir une construction compacte et d'être rangé à l'intérieur du boîtier émetteur qui, lui, est normalement posé sur un support, à côté du bébé.

Par paroi amovible on comprend une paroi qui peut être déplacée relativement au boîtier émetteur, soit en restant reliée à ce dernier, par exemple au moyen de charnières ou d'un rail de guidage, soit en étant complètement enlevée. Dans les deux cas, ladite paroi doit dégager une ouverture dans le boîtier émetteur, ouverture ayant des dimensions permettant l'insertion du boîtier récepteur dans le boîtier émetteur.

Le boîtier récepteur peut donc se ranger à l'intérieur du boîtier émetteur. Ceci permet d'avoir les deux appareils en un seul lorsqu'ils ne fonctionnent pas, tout en pouvant les dissocier en vue de leur utilisation. Ainsi, on réduit grandement l'encombrement en gagnant de la place lors du transport ou du stockage des deux appareils. De plus, le boîtier récepteur est protégé par l'extérieur du boîtier émetteur pendant leur transport.

Avantageusement, la base de ladite enceinte a une conformation prévue pour coopérer avec la face inférieure du boîtier récepteur ou l'une des parois internes de ladite enceinte présente des moyens d'accrochage du boîtier récepteur.

Ainsi, dans une variante, le boîtier récepteur peut être agencé à l'intérieur de l'enceinte du boîtier émetteur en étant simplement posé sur la base de l'enceinte. La surface de la base de l'enceinte peut être plane ou gauche, la surface de la face inférieure du boîtier récepteur pouvant être également plane ou gauche de forme complémentaire à celle de la base de l'enceinte. Ceci assure la stabilité et un bon positionnement du boîtier récepteur à l'intérieur de ladite enceinte. Une zone d'appui latérale supplémentaire peut être envisagée dans ladite enceinte, zone sur laquelle vient prendre appui l'une des faces latérales du boîtier récepteur, ce qui rend encore plus stable l'ensemble des deux pendant le transport.

Dans une autre variante, le boîtier récepteur peut être rendu solidaire d'une des parois latérales du boîtier émetteur lors de son rangement à l'intérieur de ce dernier. Pour ceci, la paroi latérale du boîtier présente une nervure formant crochet et le boîtier émetteur présente une attache de forme correspondante venant se positionner dans ledit crochet. Dans une variante supplémentaire, on peut prévoir d'attacher le boîtier récepteur à un support intermédiaire pourvu de moyens d'accrochage auprès d'une nervure de la paroi du boîtier émetteur.

De préférence, le rapport entre le volume de ladite enceinte et du boîtier récepteur est compris entre 1,3 et 2,5.

Il a été déterminé un rapport optimum des volumes lors des tests effectués, ce qui permet d'avoir suffisamment de place pour insérer facilement le boîtier récepteur à l'intérieur du boîtier émetteur sans pour autant augmenter de manière excessive le volume du boîtier émetteur. Ces valeurs s'appliquent au cas où le dispositif de surveillance comporte un émetteur qui fonctionne avec un seul récepteur. Au cas où il y aurait plusieurs récepteurs, l'enceinte du boîtier émetteur sera dimensionnée afin de pouvoir y insérer tous les récepteurs à l'intérieur.

Utilement, le boîtier émetteur comprend un socle recouvert d'une coque extérieure, ladite enceinte étant délimitée entre la coque extérieure et ledit socle.

Par socle on comprend une partie, de préférence fermée, constituant la base du boîtier émetteur, la partie supérieure du socle pouvant servir d'appui pour le boîtier récepteur. La coque extérieure a une forme de cloche ou de dôme qui peut entourer le socle sur ses côtés supérieur et latéraux ou qui vient simplement se poser sur la face supérieure du socle en définissant ainsi une enceinte fermée avec ce dernier.

Avantageusement, ledit socle renferme des moyens formant microphone, des moyens d'alimentation et un circuit électronique de gestion du fonctionnement.

Il est utile de regrouper tous ces composants à l'intérieur d'un espace fermé tout d'abord pour des raisons de protection de ces composants sensibles et ensuite pour gagner de la place à l'intérieur du boîtier émetteur.

De préférence, ladite paroi amovible comporte des moyens d'accrochage élastiques prévus pour coopérer avec des moyens de retenue de la coque extérieure.

Ceci permet de rendre solidaires la paroi amovible et la coque extérieure du boîtier émetteur, tout en facilitant leur déverrouillage qui peut être réalisé, par exemple, en utilisant un doigt traversant toute l'épaisseur de la coque extérieure et venant appuyer sur une languette élastique de la paroi amovible. A l'inverse, les moyens d'accrochage peuvent appartenir à la coque extérieure du boîtier émetteur et les moyens de retenue à la paroi amovible.

Avantageusement, ladite coque extérieure est réalisée en un matériau transparent à la lumière sur au moins une partie de sa surface.

Ceci permet d'une part, la possibilité pour l'utilisateur de regarder à l'intérieur du boîtier et, d'autre part, assure au boîtier émetteur une fonction supplémentaire, celle de veilleuse. La coque extérieure peut être entièrement, sur toute sa surface, ou seulement en partie réalisée en un matériau transparent ou semitransparent à la lumière. Cette paroi peut également être recouverte de dessins ou figures.

De préférence, le boîtier émetteur comprend une ampoule connectée aux moyens d'alimentation et au circuit électronique de ce dernier.

Ainsi, de manière avantageuse selon l'invention, l'espace de rangement à l'intérieur du boîtier émetteur est aménagé en compartiment lumineux ce qui permet de voir si le boîtier récepteur s'y trouve. En mettant le boîtier émetteur en mode veilleuse, on peut observer plus facilement à travers la fenêtre transparente si le récepteur à été rangé à l'intérieur de l'émetteur et permet de retrouver rapidement un boîtier récepteur qui aura été placé distraitement et oublié à l'intérieur de l'espace de rangement du boîtier émetteur.

De surcroît, en absence du boîtier récepteur, le boîtier émetteur peut être transformé en veilleuse, ce qui a l'avantage de fournir un appareil à fonctions multiples. L'ampoule peut être connectée au circuit électrique de l'émetteur ou elle peut être alimentée par un circuit propre.

Avantageusement, la paroi interne de ladite coque extérieure est recouverte d'un matériau réfléchissant la lumière sur au moins une partie de sa surface intérieure en regard de l'ampoule.

Ceci permet d'amplifier la luminosité de la veilleuse, tout en utilisant une ampoule de faible consommation. De préférence, la paroi interne recouverte de matériau réfléchissant fait face à la partie transparente à la lumière de la coque extérieure.

De préférence, le boîtier récepteur est monté sur un bracelet ou il comporte une attache de fixation à une pièce de vêtement.

Ceci suppose un boîtier récepteur de faibles dimensions qui est facilement portable par la personne assurant la surveillance du bébé, tout en permettant de réduire en même temps les dimensions de l'enceinte du boîtier émetteur. Avantageusement, ladite attache de fixation peut être montée sur un bracelet muni d'un support de fixation de l'attache.

L'invention sera mieux comprise à l'étude d'un mode de réalisation et illustré dans les figures annexées dans lesquelles :
- la figure 1 a montre une vue en perspective du boîtier émetteur vu de face;
- la figure 1b montre une vue en perspective de l'intérieur du boîtier émetteur vu de dos, une partie de sa coque extérieure étant enlevée;
- la figure 2a montre une vue en perspective du boîtier récepteur vu de face;
- la figure 2b montre une vue en perspective du boîtier récepteur vu de dos;
- la figure 3 est une vue en coupe axiale de l'ensemble émetteur-récepteur de l'invention, le boîtier récepteur étant monté à l'intérieur du boîtier émetteur.

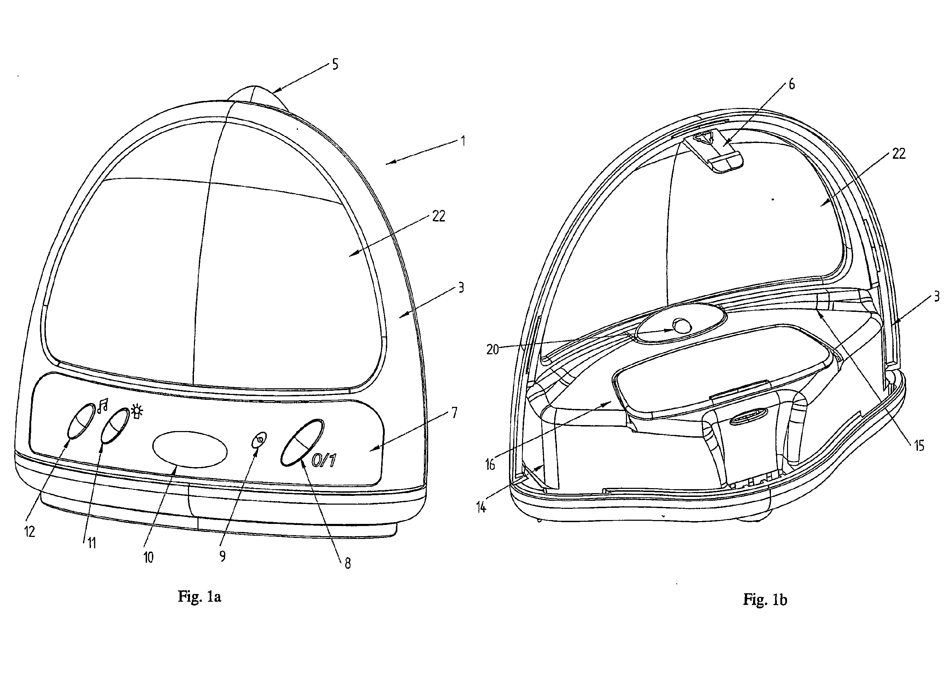

En référence aux dessins, sur la figure 1 a représentant une vue du boîtier émetteur 1, on remarque une coque extérieure 3 comportant une paroi avant 22 transparente à la lumière, une antenne 5 et une interface de commande 7. Sur l'interface de commande 7 se trouvent : un interrupteur marche/arrêt 8 comportant une diode bicolore signalant l'état de fonctionnement de l'appareil, un microphone 9, un afficheur LCD 10 qui indique la température ambiante, un bouton interrupteur marche/arrêt d'une veilleuse 11, ainsi qu'un interrupteur marche/arrêt d'une boîte à musique 12.

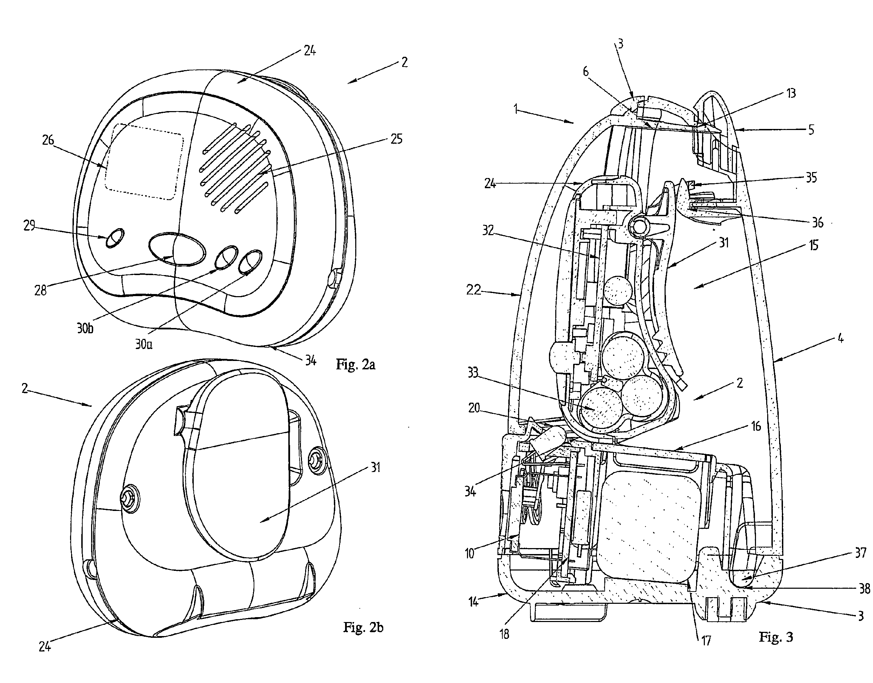

Selon l'invention, le boîtier émetteur 1 comporte une paroi amovible 4, mieux visible en figure 3, qui constitue la paroi arrière de la coque extérieure 3. Dans une variante, elle peut également être la paroi avant ou toute autre partie susceptible d'être montée amovible par rapport au reste du boîtier afin de permettre l'accès à l'intérieur du boîtier émetteur 1. La paroi amovible 4 présente, en partie inférieure, des pattes 37 de guidage qui s'insèrent dans des orifices 38 de forme correspondante de la coque extérieure 3, et, en partie supérieure, un orifice de retenue 13 d'une languette 6 appartenant à la coque extérieure 3, languette 6 qui vient s'insérer dans l'orifice 13 de la paroi amovible 4 en la verrouillant contre la coque extérieure 3.

La figure 1b laisse apparaître l'intérieur du boîtier émetteur 1, la partie arrière ou paroi amovible 4 de la coque extérieure 3 étant enlevée. Ainsi, on remarque dans la partie inférieure du boîtier émetteur 1, un socle 14 définissant avec la coque extérieure 3 une enceinte 15. Le socle 14 est réalisé sous forme d'un boîtier fermé comprenant la plupart des composants du boîtier émetteur 1. La coque extérieure 3 est en forme de dôme et entoure le socle 14 sur ses côtés latéraux.

Tel que mieux visible à la figure 3, à l'intérieur du socle 14 se trouve un boîtier à piles qui alimentent en énergie un circuit électronique 18. Le circuit électronique 18 comporte un microprocesseur assurant la gestion électronique du fonctionnement de l'appareil, dont la transformation du signal du microphone 9 en un signal radio d'une fréquence prédéterminée qui est transmis au récepteur à travers l'antenne 5.

Une ampoule 20 est agencée à l'avant et en partie supérieure du socle 14, en faisant saillie à l'extérieur de ce dernier et en étant orientée vers la face interne de la paroi amovible 4 de la coque extérieure 3. L'ampoule 20 est reliée au circuit électronique 18 assurant son alimentation et son fonctionnement. Afin d'assurer une bonne réflexion de la lumière fournie par l'ampoule 20 à l'intérieur de l'enceinte 15, la face interne de la paroi amovible 4 est réalisée en un matériau métallique poli ou en un matériau plastique métallisé à finition très précise.

Le boîtier récepteur 2 de l'invention est visible en figure 2a, notamment la face avant de son boîtier 24 qui comprend : un haut parleur 25, un afficheur 26 du type à cristaux liquides, un interrupteur marche/arrêt 28, un bouton pour la mise en marche ou l'arrêt du vibreur 29 et deux boutons de réglage du volume sonore : l'un 30a, pour augmenter le volume et l'autre 30b pour diminuer le volume du haut parleur 25. Les dimensions du boîtier récepteur sont réduites de manière à ce que le boîtier récepteur puisse être porté attaché à un vêtement ou monté sur un bracelet. Pour ceci, le boîtier 24 comporte sur sa face arrière une attache de fixation 31, tel que visible en figure 2b. A titre d'exemple, un tel boîtier récepteur peut avoir les dimensions maximum suivantes : 40mm x 40mm x 15mm.

Dans une variante, l'attache 31 de fixation peut être montée sur un support plan ou légèrement recourbé d'un bracelet. Ce support est muni d'une fente permettant l'insertion de l'attache qui devient ainsi solidaire du bracelet et peut être portée au poignet. De manière avantageuse, la même fente du support de bracelet peut servir de crochet de fixation du boîtier récepteur 2 à l'intérieur du boîtier émetteur 1, tel que représenté à la figure 3.

Le boîtier récepteur renferme des piles d'alimentation ou accumulateurs 33, visibles en figure 3, une antenne intégrée non représentée aux figures, un vibreur, ainsi qu'un circuit électronique 32 à microprocesseur assurant la gestion de son fonctionnement, dont la réception du signal émis par l'antenne 5 de l'émetteur et la transformation de ce signal en un signal auditif du haut parleur 25. A l'écran de l'afficheur 26 sont représentés : l'intensité du signal capté par le récepteur, le réglage du niveau sonore, le numéro du canal de réception, l'état de chargement des accumulateurs, l'état du vibreur, etc.

En fonctionnement, le boîtier émetteur 1 est placé dans la chambre du bébé, à proximité de celui-ci. L'appareil est branché au secteur et il est mis en marche par le parent en actionnant l'interrupteur 10. Le boîtier récepteur 2, une fois mis en marche par l'interrupteur 28, est attaché à une pièce de vêtement du parent qui peut ainsi s'éloigner du bébé, tout en restant en contact avec lui. Les cris du bébé sont transmis par le boîtier émetteur 1 au boîtier récepteur 2 et sont par la suite entendus par le parent qui peut ainsi réagir. Le boîtier émetteur 1 peut également fonctionner comme veilleuse, ou comme boîte à musique en activant les fonctions respectives dans le boîtier émetteur 1.

Lorsque le dispositif de surveillance, comportant le boîtier émetteur 1 et le boîtier récepteur 2, est mis hors fonctionnement pour des raisons de stockage ou pour l'amener avec soi en déplacement en dehors de l'habitat, le parent peut insérer le boîtier récepteur 2 à l'intérieur du boîtier émetteur 1, tel que représenté à la figure 3. Pour accéder à l'intérieur de l'enceinte 15 du boîtier émetteur 1, le parent retire la paroi amovible 4 en appuyant sur la languette d'accrochage 6 de la coque extérieure 3 et en la désolidarisant de l'orifice 13 de forme correspondante de la paroi 4. Ensuite, le parent place le boîtier récepteur 2 dans l'enceinte 15, avec la face inférieure 34 de son boîtier 24 posée sur la base 16 de l'enceinte 15 ou, dans une variante représentée à la figure 3, en accrochant le support 35 du boîtier récepteur 2 à la nervure 36 de la paroi amovible 4. Une fois le boîtier récepteur mis en place, le parent referme l'enceinte 15 en remettant en place la paroi amovible 4.

Les pièces enveloppes, coques ou boîtiers de l'émetteur et du récepteur sont réalisées de préférence en un matériau thermoplastique, par exemple ABS, qui présente une bonne résistance aux chocs et permet de transporter l'ensemble émetteur-récepteur en toute sécurité.

D'autres variantes et modes de réalisation de l'invention peuvent être envisagés sans sortir du cadre de ses revendications.

Ainsi, on peut imaginer que le socle du boîtier émetteur est muni d'un transformateur comportant des contacts d'alimentation venant en prise avec des fiches d'alimentation du boîtier récepteur, permettant ainsi de recharger les accumulateurs du boîtier récepteur lorsqu'il est placé à l'intérieur du boîtier émetteur.

## Revendications

1. Ensemble émetteur - récepteur pour un dispositif de surveillance des bébés, comportant un boîtier émetteur (1) et un boîtier récepteur (2), **caractérisé en ce que** le boîtier émetteur (1) comporte une enceinte (15) délimitée entre une coque extérieure (3) en forme de dôme et un socle (14) qu'elle recouvre, la coque extérieure (3) étant réalisée en un matériau transparent ou semitransparent à la lumière sur au moins une partie de sa surface avant, au moins une paroi amovible (4) arrière permettant l'accès à l'intérieur de l'enceinte (15) ayant des dimensions supérieures à celles du boîtier récepteur (2), et que le rapport entre le volume de ladite enceinte (15) et du boîtier récepteur (2) est compris entre 1,3 et 2,5.

2. Ensemble émetteur - récepteur selon la revendication 1, **caractérisé en ce que** le boîtier émetteur (1) comprend une ampoule (20) connectée aux moyens d'alimentation et au circuit électronique de ce dernier.

3. Ensemble émetteur - récepteur selon l'une des revendications précédentes, **caractérisé en ce que** la paroi interne de ladite coque extérieure (3) est recouverte d'un matériau réfléchissant la lumière sur au moins une partie de sa surface intérieure en regard de l'ampoule.

4. Ensemble émetteur - récepteur selon la revendication 1, **caractérisé en ce que** la base (16) de ladite enceinte (15) a une conformation prévue pour coopérer avec la face inférieure (34) du boîtier récepteur (2) ou **en ce que** l'une des parois internes de ladite enceinte (15) présente des moyens d'accrochage du boîtier récepteur (2).

5. Ensemble émetteur - récepteur selon la revendication 1, **caractérisé en ce que** ledit socle (14) renferme des moyens formant microphone (9), des moyens d'alimentation et un circuit électronique (18) de gestion du fonctionnement.

6. Ensemble émetteur - récepteur selon l'une des revendications précédentes, **caractérisé en ce que** ladite paroi amovible (4) comporte des moyens d'accrochage élastiques prévus pour coopérer avec des moyens de retenue de la coque extérieure (3).

7. Ensemble émetteur - récepteur selon l'une des revendications précédentes, **caractérisé en ce que** le boîtier récepteur (2) est monté sur un bracelet ou il comporte une attache (31) de fixation à une pièce de vêtement.

## Claims

1. A transmitter and receiver set for a baby monitor device, the set comprising a transmitter unit (1) and a receiver unit (2), the set being **characterized in that** the transmitter unit (1) includes an enclosure (15) defined between an outer shell (3) in the shape of a dome and a base (14) that it covers, the outer shell (3) being made of a material that is transparent or semitransparent to light over at least a portion of its front surface, at least one removable rear wall (4) giving access to the inside of the enclosure (15) having dimensions greater than those of the receiver unit (2), and **in that** the ratio between the volume of said enclosure (15) and of said receiver unit (2) lies in the range 1.3 to 2.5.

2. A transmitter and receiver set according to claim 1, **characterized in that** the transmitter unit (1) includes a bulb (20) connected to power supply means and to the electronic circuit thereof.

3. A transmitter and receiver set according to either preceding claim, **characterized in that** the inside wall of said outer shell (3) is covered in a light-reflecting material over at least a fraction of its inside surface facing the bulb.

4. A transmitter and receiver set according to claim 1, **characterized in that** the base (16) of said enclosure (15) has a shape designed to co-operate with the bottom face (34) of the receiver unit (2) or **in that** one of the inside walls of said enclosure (15) presents means for holding the receiver unit (2).

5. A transmitter and receiver set according to claim 1, **characterized in that** said base (14) contains microphone-forming means (9), power supply means, and an electronic circuit (18) for controlling operation.

6. A transmitter and receiver set according to any preceding claim, **characterized in that** said removable wall (4) includes resilient holder means designed to co-operate with retaining means of the outer shell (3).

7. A transmitter and receiver set according to any preceding claim, **characterized in that** the receiver unit (2) is mounted on a bracelet or includes a fastener (31) for attaching to a piece of clothing.

## Patentansprüche

1. Sender-Empfänger-Baugruppe für eine Babyüberwachungsvorrichtung, mit einem Sendergehäuse (1) und einem Empfängergehäuse (2), **dadurch gekennzeichnet, dass** das Sendergehäuse (1) einen zwischen einer kuppelförmigen Außenschale (3) und einem von dieser abgedeckten Sockel (14) begrenzten Raum (15) aufweist, wobei die Außenschale (3) auf wenigstens einem Teil ihrer vorderen Fläche aus einem lichtdurchlässigen oder halblichtdurchlässigen Material besteht, wobei wenigstens eine hintere bewegliche Wand (4), die den Zugang ins Innere des Raums (15) ermöglicht, Abmessungen aufweist, die größer sind als diejenigen des Empfängergehäuses (2), und dass das Verhältnis zwischen dem Volumen des Raums (15) und dem Empfängergehäuse (2) zwischen 1,3 und 2,5 beträgt.

2. Sender-Empfänger-Baugruppe nach Anspruch 1, **dadurch gekennzeichnet, dass** das Sendergehäuse (1) eine Glühbirne (20) aufweist, die mit den Versorgungsmitteln und der elektronischen Schaltung dieses letzteren verbunden ist.

3. Sender-Empfänger-Baugruppe nach einem der vorhergehenden Ansprüche, **dadurch gekennzeichnet, dass** die Innenwand der Außenschale (3) mit einem Material überzogen ist, das das Licht auf mindestens einem Teil ihrer Innenfläche gegenüber der Glühbirne reflektiert.

4. Sender-Empfänger-Baugruppe nach Anspruch 1, **dadurch gekennzeichnet, dass** die Basis (16) des Raums (15) eine Gestaltung aufweist, die dazu vorgesehen ist, mit der unteren Fläche (34) des Empfängergehäuses (2) zusammenzuwirken, oder dass eine der Innenwände des Raums (15) Mittel zum Einhängen des Empfängergehäuses (2) aufweist.

5. Sender-Empfänger-Baugruppe nach Anspruch 1, **dadurch gekennzeichnet, dass** der Sockel (14) ein Mikrofon (9) bildende Mittel, Versorgungsmittel und eine elektronische Schaltung (18) zum Steuern des Betriebs einschließt.

6. Sender-Empfänger-Baugruppe nach einem der vorhergehenden Ansprüche, **dadurch gekennzeichnet, dass** die bewegliche Wand (4) elastische Einhängemittel aufweist, die dazu vorgesehen sind, mit Mitteln zum Halten der Außenschale (3) zusammenzuwirken.

7. Sender-Empfänger-Baugruppe nach einem der vorhergehenden Ansprüche, **dadurch gekennzeichnet, dass** das Empfängergehäuse (2) an einem Armband angebracht ist oder eine Klemme (31) zur Befestigung an einem Kleidungsstück aufweist.
